# EUROPEAN PATENT APPLICATION

(11) **EP 4 600 806 A1**
(43) Date of publication of application: **13.08.2025**
(21) Application number: 25150302.5
(22) Date of filing: 06.01.2025
(51) Int. Cl.: G06F 7/533

(54) **MULTIPLIER CIRCUIT WITH CARRY-BASED PARTIAL PRODUCT ENCODING**

(30) Priority: 06.02.2024 US 202463550599 P; 28.03.2024 US 202418620683
(71) Applicant: Altera Corporation, San Jose, CA 95134 (US); Kucherenko, Igor Viktorovich, San Jose, CA 95134 (US); Langhammer, Martin, Alderbury (GB); Pasca, Bogdan, 31000 Toulouse (FR)
(72) Inventor: KUCHERENKO, Igor Viktorovich, San Jose, CA 95134 (US); LANGHAMMER, Martin, Alderbury (GB); PASCA, Bogdan, 31000 Toulouse (FR)
(74) Representative: Viering, Jentschura & Partner mbB Patent- und Rechtsanwälte

(57) **Abstract**

Integrated circuit devices, methods, and circuitry for an efficient multiplier are provided. Multiplier circuitry to multiply a multiplicand value with a multiplier value may include, among other things, input circuitry and carry-based coding circuitry. The input circuitry may receive the multiplicand value and the multiplier value. The carry-based coding circuitry may receive bits of the multiplier value and generate multiplication codes using a carry-based coding scheme that includes multiplication codes according to a Booth's coding scheme but with at least one multiplication code that is removed and replaced with another at least one multiplication code with a different value. A first encoder of the carry-based coding circuitry may receive a carry signal to adjust a multiplication code value of the first encoder based on a second encoder of the carry-based coding circuitry encoding the multiplication code with the different value.

## Description

### CROSS-REFERENCE TO RELATED APPLICATIONS

This application claims priority to U.S. Provisional Application No. 63/550,599, filed February 6, 2024, entitled "Multiplier Architecture with a Carry Based Partial Product Encoding," which is incorporated by reference herein in its entirety for all purposes.

### BACKGROUND

The present disclosure relates generally to integrated circuit (IC) devices such as processors, application specific integrated circuits (ASICs), and programmable logic devices (PLDs) that include a hardened multiplier circuit with partial product encoding to provide area- and/or power-efficient multiplication.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Integrated circuits are ubiquitous in modern electronics. Many integrated circuit operations involve multiplying two values to obtain a product using a multiplier circuit. Artificial intelligence (AI) in particular involves so many multiplier instances that there may be millions of multiplier circuits or more per device. Indeed, multipliers are often the most expensive digital portion of modern arithmetic circuits, which are used in cryptography, AI, floating point compute for high performance computing (HPC), and more.

### BRIEF DESCRIPTION OF THE DRAWINGS

Various aspects of this disclosure may be better understood upon reading the following detailed description and upon reference to the drawings in which:
FIG. 1 illustrates a block diagram of a system that may implement arithmetic operations using a digital signal processing (DSP) block that includes a multiplier circuit;
FIG. 2 illustrates an example of the integrated circuit device as a programmable logic device, such as a field-programmable gate array (FPGA);
FIG. 3 is a block diagram of an FPGA digital signal processing (DSP) block that includes a multiplier circuit;
FIG. 4 is a block diagram of one example of the multiplier circuit;
FIG. 5 is a block diagram of Booth's Radix 4 multiplier encoders that generate multiplier values used to select partial products independently of one another;
FIG. 6 is a truth table of the Booth's Radix 4 multiplier encoders;
FIG. 7 is a block diagram of multiplier encoders to generate multiplier values used to select partial products;
FIG. 8 is a truth table for an efficient carry-based radix 4 multiplier encoder that includes at least one encoding that is not independent of other encoders but which allows for partial product selection using a multiplexer with fewer gates due to fewer possible codings;
FIG. 9 is a block diagram of partial product coding circuitry that uses a prefix tree to generate carries for a number of efficient carry-based radix 4 multiplier encoders;
FIG. 10 is an example logic gate diagram of the efficient carry-based radix 4 multiplier encoder;
FIG. 11 is an example logic gate diagram of a partial product multiplexer having fewer gates due to fewer possible codings of the efficient carry-based radix 4 multiplier encoder;
FIG. 12 is a block diagram of a multiplier circuitry that includes efficient carry-based radix 4 multiplier encoders and other types of encoders;
FIG. 13 is a flowchart of a method for efficiently multiplying two values using the efficient carry-based radix 4 multiplier encoders; and
FIG. 14 is a block diagram of a data processing system incorporating the efficient multiplier circuitry.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

This disclosure relates to efficient multiplier circuitry that may be used in any suitable integrated circuit that performs an operation that multiplies two values. By way of example, the multiplier circuit may be included in a processor (e.g., a central processing unit (CPU) or a graphics processing unit (GPU)), an application specific integrated circuit (ASIC) (e.g., a specialized artificial intelligence (AI) integrated circuit), or a programmable logic device (PLD) (e.g., in a digital signal processing (DSP) block of a field programmable gate array (FPGA) integrated circuit). A multiplier circuit multiplies two values, a multiplicand (A) and a multiplier (B). To obtain the product of the multiplicand and the multiplier, the multiplier circuit generates partial products representing multiples of the multiplicand based on values of certain components of the multiplier. The partial products are then added together to obtain the full product. Multiplier circuit architectures have been implemented historically using Booth's encoding schemes to generate the partial products. These have been used for decades and give good results. Very few new methods have been shown over the past two decades. This disclosure provides a new method, using a counterintuitive approach, that provides higher performance and lower area for certain speed ranges.

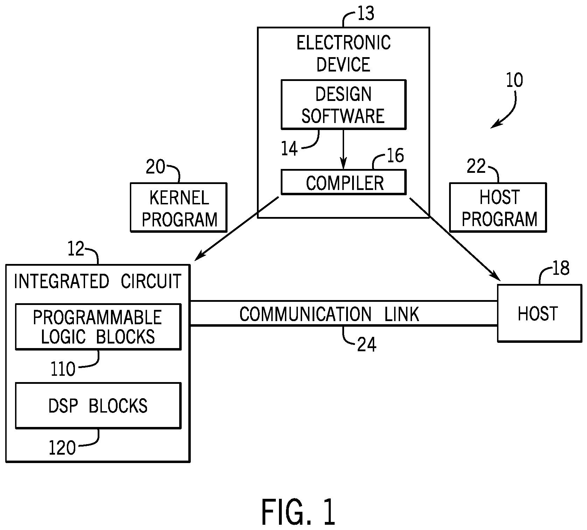

With the foregoing in mind, FIG. 1 illustrates a block diagram of one example of a system 10 that may be used to configure an integrated circuit device 12 with a DSP block that includes the efficient multiplier circuit of this disclosure. However, as mentioned above, the efficient multiplier circuit of this disclosure may be used in any suitable integrated circuit. A designer may desire to implement a system on the integrated circuit device 12 (e.g., a programmable logic device such as a field-programmable gate array (FPGA) or an application-specific integrated circuit (ASIC) that includes programmable logic circuitry). The integrated circuit device 12 may include a single integrated circuit, multiple integrated circuits in a package (e.g., a multi-chip module (MCM), a system-in-package (SiP)), or multiple integrated circuits in multiple packages communicating remotely (e.g., via wires or traces). In some cases, the designer may specify a high-level program to be implemented, such as an OPENCL^{®} program that may enable the designer to more efficiently and easily provide programming instructions to configure a set of programmable logic cells for the integrated circuit device 12 without specific knowledge of low-level hardware description languages (e.g., Verilog, very high speed integrated circuit hardware description language (VHDL)). For example, since OPENCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

In a configuration mode of the integrated circuit device 12, a designer may use an electronic device 13 (e.g., a computer) to implement high-level designs (e.g., a system user design) using design software 14, such as a version of INTEL^{®} QUARTUS^{®} by INTEL CORPORATION. The electronic device 13 may use the design software 14 and a compiler 16 to convert the high-level program into a lower-level description (e.g., a configuration program, a bitstream). The compiler 16 may provide machine-readable instructions representative of the high-level program to a host 18 and the integrated circuit device 12. The host 18 may receive a host program 22 that may be implemented by the kernel programs 20. To implement the host program 22, the host 18 may communicate instructions from the host program 22 to the integrated circuit device 12 via a communications link 24 that may be, for example, direct memory access (DMA) communications or peripheral component interconnect express (PCIe) communications. In some embodiments, the kernel programs 20 and the host 18 may enable configuration of circuits including programmable logic blocks 110 and digital signal processing (DSP) blocks 120 on the integrated circuit device 12. The programmable logic blocks 110 may include circuitry and/or other logic elements and may be configurable to implement a variety of functions in combination with digital signal processing (DSP) blocks 120.

The DSP blocks 120 may include circuitry to carry out operations that involve multiplication, such as to perform multiply-accumulate operations or matrix-matrix or matrix-vector multiplication. The integrated circuit device 12 may include many (e.g., hundreds or thousands) of the DSP blocks 120. Additionally, the DSP blocks 120 may be communicatively coupled to another such that data output from one DSP block 120 may be provided to other DSP blocks 120. A DSP block 120 may include hardened arithmetic circuitry that is purpose-built for performing arithmetic operations. The hardened arithmetic circuitry of the DSP blocks 120 may be contrasted with arithmetic circuitry that may be constructed in soft logic in the programmable logic circuitry (e.g., the programmable logic blocks 110). While circuitry for performing the same arithmetic operations may be programmed into the programmable logic circuitry (e.g., the programmable logic blocks 110), doing this may take up significantly more die area, may consume more power, and/or may consume more processing time.

The designer may use the design software 14 to generate and/or to specify a low-level program, such as the low-level hardware description languages described above. Further, in some embodiments, the system 10 may be implemented without a separate host program 22. Thus, embodiments described herein are intended to be illustrative and not limiting.

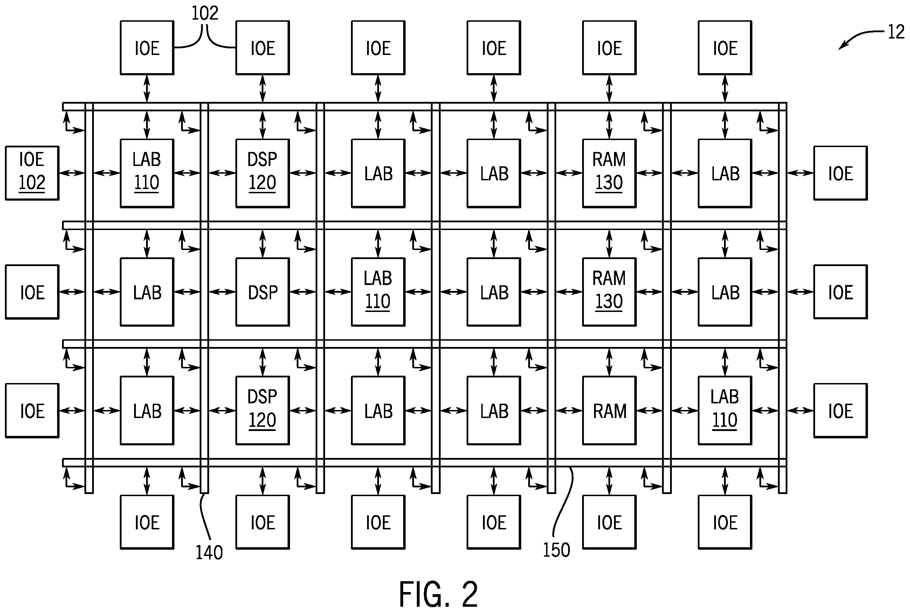

An illustrative embodiment of a programmable integrated circuit device 12 such as a programmable logic device (PLD) that may be configured to implement a circuit design is shown in FIG. 2. As shown in FIG. 2, the integrated circuit device 12 (e.g., a field-programmable gate array integrated circuit die) may include a two-dimensional array of functional blocks, including programmable logic blocks 110 (also referred to as logic array blocks (LABs) or configurable logic blocks (CLBs)) and other functional blocks, such as random-access memory (RAM) blocks 130 and digital signal processing (DSP) blocks 120, for example. Functional blocks such as LABs 110 may include smaller programmable regions (e.g., logic elements, configurable logic blocks, or adaptive logic modules) that receive input signals and perform custom functions on the input signals to produce output signals. LABs 110 may also be grouped into larger programmable regions sometimes referred to as logic sectors that are individually managed and configured by corresponding logic sector managers. The grouping of the programmable logic resources on the integrated circuit device 12 into logic sectors, logic array blocks, logic elements, or adaptive logic modules is merely illustrative. In general, the integrated circuit device 12 may include functional logic blocks of any suitable size and type, which may be organized in accordance with any suitable logic resource hierarchy.

Programmable logic circuitry of the integrated circuit device 12 may include programmable memory elements, which are sometimes referred to as configuration random access memory (CRAM). The memory elements may be loaded with configuration data (also called programming data or configuration bitstream) using input-output elements (IOEs) 102. Once loaded, the memory elements each provide a corresponding static control signal that controls the operation of an associated functional block (e.g., LABs 110, DSP 120, RAM 130, or input-output elements 102).

In one scenario, the outputs of the loaded memory elements are applied to the gates of metal-oxide-semiconductor transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), look-up tables, logic arrays, AND, OR, NAND, and NOR logic gates, pass gates, etc.

The memory elements may use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory, configuration random-access memory (CRAM), or programmable memory elements. Programmable logic device (PLD) 100 may be configured to implement a custom circuit design. For example, the configuration RAM may be programmed such that LABs 110, DSP 120, and RAM 130, programmable interconnect circuitry (i.e., vertical channels 140 and horizontal channels 150), and the input-output elements 102 form the circuit design implementation.

In addition, the programmable logic device may have input-output elements (IOEs) 102 for driving signals off of the integrated circuit device 12 and for receiving signals from other devices. Input-output elements 102 may include parallel input-output circuitry, serial data transceiver circuitry, differential receiver and transmitter circuitry, or other circuitry used to connect one integrated circuit to another integrated circuit.

The integrated circuit device 12 may also include programmable interconnect circuitry in the form of vertical routing channels 140 (i.e., interconnects formed along a vertical axis of the integrated circuit 100) and horizontal routing channels 150 (i.e., interconnects formed along a horizontal axis of the integrated circuit 100), each routing channel including at least one track to route at least one wire. If desired, the interconnect circuitry may include pipeline elements, and the contents stored in these pipeline elements may be accessed during operation. For example, a programming circuit may provide read and write access to a pipeline element.

Note that routing topologies other than the topology of the interconnect circuitry depicted in FIG. 1 may be used. For example, the routing topology may include wires that travel diagonally or that travel horizontally and vertically along different parts of their extent as well as wires that are perpendicular to the device plane in the case of three-dimensional integrated circuits, and the driver of a wire may be located at a different point than one end of a wire. The routing topology may include global wires that span substantially all of the integrated circuit device 12, fractional global wires such as wires that span part of the integrated circuit device 12, staggered wires of a particular length, smaller local wires, or any other suitable interconnection resource arrangement.

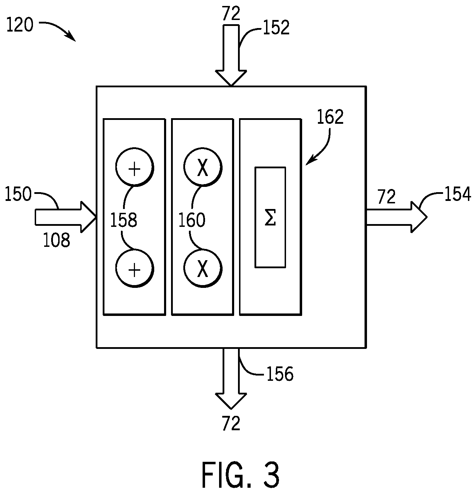

The integrated circuit device 12 may be programmed to perform a wide variety of operations. Indeed, many system designs that may be programmed into the integrated circuit device 12 may leverage the efficiency of performing arithmetic operations using the DSP blocks 120. FIG. 3 shows a block diagram of one example of a DSP Block 120 that may perform multiplication operations (e.g., as often used in digital signal processing). A number of inputs and outputs (e.g., to global FPGA routing) are provided. These signals are limited as connections to global routing are very expensive. Inputs 150 and 152 may feed data of any suitable bit width into the DSP block 120. By way of example, data of up to 108 bits may be fed into the input 150 while data of up to 72 bits may be fed into the input 152. Outputs 154 and 156 likewise may output data of any suitable width out of the DSP block 120. In the illustrated example, the outputs 154 and 156 output data with a width of 72 bits. However, it should be appreciated that any other suitable bit widths may be used (e.g., 64, 96). Pre-adders 158 may be included, as well as several multiplier circuits 160. The multiplier circuits 160 may be of any suitable size (e.g., INT8, INT12, INT18, INT16) and/or may be symmetric (e.g., 8x8) or asymmetric (e.g., 18x19) and summation circuitry 162 may be used to sum or accumulate the results of the pre-adders 158 and/or multiplier circuits 160.

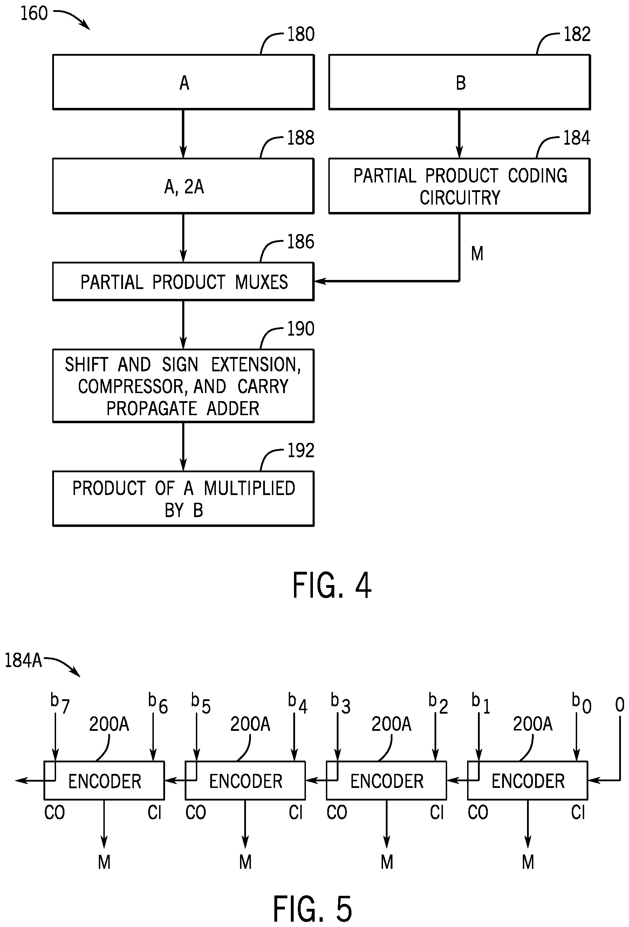

FIG. 4 is a block diagram of one example of an efficient multiplier circuit 160 to multiply a multiplicand (A) 180 with a multiplier (B) 182. The multiplier circuit 160 may employ a new, efficient, carry-based form of an encoding circuit to generate partial products. Using the partial product coding circuitry 184, the multiplier circuit 160 generates the product of the multiplicand (A) 180 and the multiplier (B) 182 by generating a series of partial products associated with different sets of bits of the multiplier (B) 182 and summing the partial products to obtain a final product. In one example, the multiplier circuit 160 may use partial product coding circuitry 184 to determine a code M. When the partial product coding circuitry 184 uses an efficient carry-based radix 4 multiplier encoder, the code M may be provided to partial product multiplexers (MUXes) 186 to produce a partial product of either A, -A, or 2A based on A or 2A from shifter circuitry 188 (the sign may be applied by the partial product MUXes 186). As will be discussed further below, this is in contrast to a known Booth's Radix 4 encoding circuit, which includes a coding of M of A, -A, 2A, and -2A. Because there are fewer possible values of M using the efficient carry-based partial product coding circuitry 184 of this disclosure as compared to previous versions of Booth's encoding circuitry, the partial product MUXes 186 may use fewer gates and, therefore, may take up less die area and/or operate at a higher maximum frequency. While this disclosure describes the use of a new radix 4 encoding scheme, encoding schemes of other radices may be used. These may include, for example, a new radix 8 encoding scheme that includes at least some codings (values of M) found in Booth's Radix 8 encoding but that has at least one fewer coding. This allows for the partial product MUXes 186 to have fewer gates than otherwise, with a counter-intuitive tradeoff that will be discussed further below.

To generate each partial product, the partial product coding circuitry 184 may generate a code based on the value of certain sets of bits of the multiplier (B) 182. The shifter circuitry (A, 2A) 188 may provide the value A by passing the multiplicand (A) 180 or the value 2A by doubling the multiplicand (A) 180 using any suitable circuitry (e.g., by shifting and adding a 0 constant on the least significant bit). Although not shown in FIG. 4, tripler circuitry (3A) may be used to provide the value 3A by tripling (e.g., 2A + A) the multiplicand (A) 180 for certain other coding schemes, such as a radix 8 coding scheme. Thereafter, the partial products may be added together using any suitable addition. Here, this is shown to be accomplished by shift and sign extension, compressor, and carry propagate adder circuitry 190, the result of which is a product 192 representing the value A multiplied by the value B.

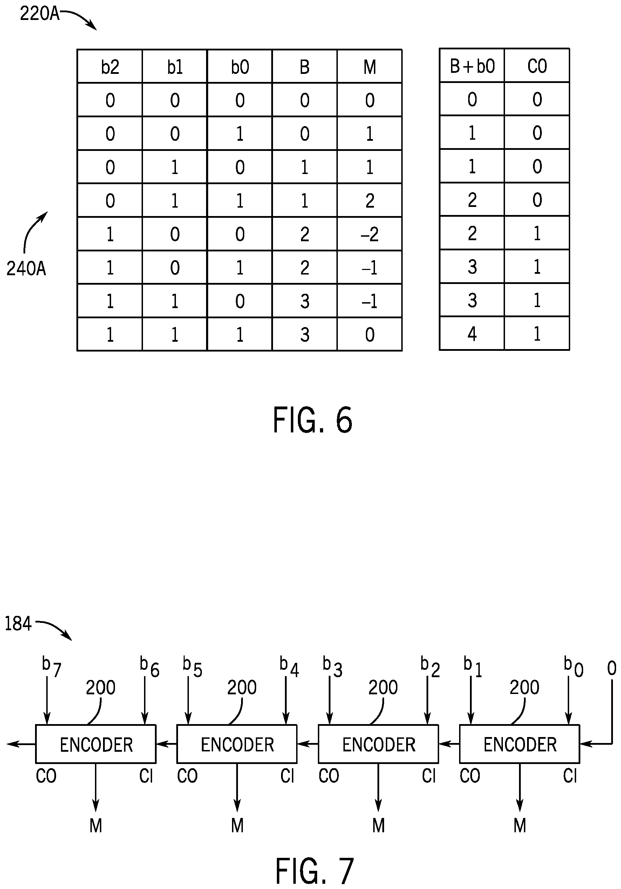

To better understand the new coding scheme used by the partial product coding circuitry 184, a variant shown as partial product coding circuitry 184A in FIGS. 5 and 6 will be first discussed. The partial product coding circuitry 184A may carry out a Booth's Radix 4 encoding scheme. The partial product coding circuitry 184A may be represented as a series of encoders 200 that each take in two adjacent bits, referred to as a dibit, of the multiplier (B) 182 and generate a code M. Most multiplier architectures are currently based on some variant of Booth's encoding, which creates partial products that are completely independent of each other. Indeed, as shown in FIG. 5, the partial product coding circuitry 184A uses a number of encoders 200A that are independent of one another. This is because each encoder 200A generates a code M based on a particular dibit (e.g., bₒ and b₁, b₂ and b₃, b₄ and b₅, b₆ and b₇), plus the most significant bit (MSB) of the dibit processed by the previous encoder 200A. In this way, each encoder 200A may generate the code M based only on values from the multiplier (B) 182, and there is no dependency (e.g., due to a true carry-out) on the previous encoder 200A. This allows many more degrees in freedom in synthesis and placement and is a major contributor to the high-performance multiplier-based systems in use today.

FIG. 6 is a truth table 220A for Booth's Radix 4 that defines the codings M for the encoders 200A of FIG. 5. Two bits (one dibit) are coded at a time, without any dependencies between the dibits. To avoid a carry between encoders 200A, the MSB of the previous dibit is used. The multiplicand (A) 180 is multiplied by the code M value to generate a partial product. Value B is shown in the truth table 220A as representing the value of the dibit (e.g., b2 and b1). Different values of the code M are output by the encoders 200A based on the value of B plus the value of the MSB of the prior dibit (b0), shown in the truth table 220A as B+b0, and the MSB of the current dibit (b2, also shown here as a carry-out (CO), since the MSB of the current dibit will be treated like a carry-in (CI) in the next encoder 200A). Negative numbers are generally implemented using a 1's complement (inversion), followed by the addition of the sign bit back into the vector to make a 2's complement number. The addition of the sign bit involves a carry operation, so all of the sign bits may be combined into a single vector and compressed (added) with the rest of the partial products.

In one way, Booth's Radix 4 operates as a CSD (canonic signed digit) arithmetic system. A run of '1' bits can be replaced by a single '1' at the first '0' after the MSB of the run, and a subtraction of a '1' at the LSB of the run. This is shown by the use of negative values of the code M when the dibit MSB (b2) - also shown here as a carryout (CO) value - is 1. For example, at line 240A of the truth table 220A, the dibit value B is 2 and the current MSB (b2, treated here as a CO that will be a CI in the next encoder 220A) is 1, so the value M codes as -2.

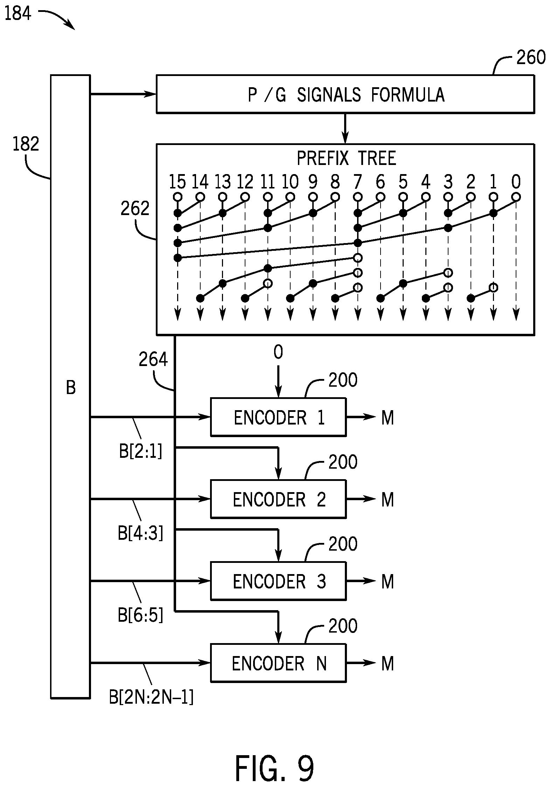

The new coding of this disclosure can be understood by restating the Booth's 4 codes in a CSD-like form that reduces the number of possible codings M, but which results in a dependency on the output of the encoders. Thus, the partial product coding circuitry 184 of this disclosure may be represented as a series of dependent encoders 200 that each take in two adjacent bits, referred to as a dibit, of the multiplier (B) 182 and generate respective codes M. In the example of FIG. 7, the encoders 200 use the new efficient carry-based radix 4 multiplier encoding scheme of this disclosure. Each encoder 200 may be logically represented as receiving a carry-in (CI) bit from a prior encoder 200 and outputting a carry-out (CO) bit to a subsequent encoder 200. In practice, however, the carry-in (CI) bits may be generated by carry lookahead circuitry such as propagate and generate circuitry and a prefix tree (e.g., as will be discussed below with reference to FIG. 9).

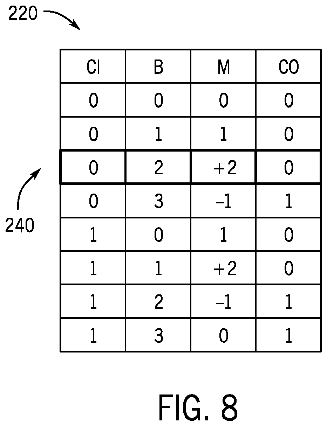

Ordinarily, the dependency between the encoders 200 could be considered detrimental due to the additional constraints placed on logic circuitry synthesis. In this case, however, the encoders 200 of FIG. 7 may implement the new coding according to a truth table 220, shown in FIG. 8, that reduces the total number of possible codings M by at least one, which reduces the number of gates that are used by the partial product MUXes. In the truth table 220 of FIG. 8, CI is the MSB of the previous dibit in most cases (but not for the coding shown in line 240, as will be discussed in greater detail below). B is the current dibit being input into the encoder 200, which can have values "00", "01", "10", and "11." M is the multiplication code that defines the operation on the multiplicand to make the partial product (e.g., the value by which the multiplicand is multiplied in generating the partial product). CO is the carry out, which is the MSB of the current dibit into the next dibit in most cases (or can be seen as the '1' after the run of `1's in the current dibit). For simplicity, and to avoid carries across the different encoders, "2" is treated as a run of '1' s. To make the coding correct, the operation for a dibit B value of 2 with a CO of 1 is a value M of -2, which is the CO*2²-2. In other words, owing to the use of CO of 1 in negating the output, the operation is actually x(4-2) = 2x. In the truth table 220A of FIG. 6, this is shown in the line 240A, where B+b0 (in other words, B + plus a CI of b0) is 2 and CO is 1, and thus the code M is -2.

In contrast, the truth table 220 of FIG. 8 will do something counter-intuitive, and code this case directly as an M = 2 operation. The line 240 of the truth table 220 shows a new way of coding M when B is 2 and the CI is 0. Rather than code this value as M = -2 (and produce a CO of 1), the code M may be selected to be M = 2. This will eliminate the code M = -2 from the encoders 200 and, as a consequence, may significantly reduce the complexity of the partial product MUXes 186. But when the dibit B is 2 (binary "10"), the MSB of this dibit is "1", which would otherwise be used to negate the results when provided as a CO. Accordingly, in the truth table 220 of FIG. 8, the CO may be provided as "0" rather than "1", which is the MSB of the dibit B of line 240. The tradeoff is that now each encoder 200 depends on the COs of the prior encoders 200.

Thus, a carry may be defined across the encoders 200, but this is not very expensive in terms of additional logic circuitry and constraints on synthesis. Moreover, this carry chain may be defined differently, because it will be across the dibit, rather than down a column. Here, a CO is defined if there is either a generate or a propagate across the dibit. A generate occurs if there is a carry in and the dibit is 2 or greater, and a propagate occurs if the dibit is 3.

An example of this is shown in FIG. 9. Propagate/generate circuitry 260 may produce propagate (p) and generate (g) signals based on the multiplier B 182. The propagate/generate circuitry 260 may implement any suitable formula to generate the propagate (p) and generate (g) signals. A carry prefix tree 262, or a carry lookahead adder (CLA), may be used to calculate the carries across all encoders 200 based on the propagate (p) and generate (g) signals, similar to the way a normal carry propagate adder (CPA) is implemented, although here there is a different (horizontal vs. vertical) definition of the generate and propagate conditions. The carry prefix tree 262 may be of any suitable type, such as Sklansky, Brent-Kung, Kogge-Stone, Ladner-Fisher, Han-Carson, or the like. In the example shown in FIG. 9, the carry prefix tree 262 is shown as a 16-bit prefix tree, but it should be understood that the prefix tree 262 may be of any suitable bit depth (larger or smaller).

The carry values from the carry prefix tree 262 may be used by the encoders 200. The encoders 200 each receive a dibit of the multiplier (B) 182. A first encoder 200 receives a dibit of bits B[2:1] and a defined carry bit of 0, a second encoder 200 receives a dibit of bits B[4:3] and a second carry bit provided by the prefix tree 262 (equivalent to the CO from the immediately prior encoder 200), a third encoder 200 receives a dibit of bits B[6:5] and a third carry bit provided by the prefix tree 262 (equivalent to the CO from the immediately prior encoder 200), and so on, to an Nth encoder 200 that receives a dibit of bits B[2N:2N-1] and an Nth carry bit provided by the prefix tree 262 (equivalent to the CO from the immediately prior encoder 200 N-1). There may be any suitable number of encoders 200 based on the bit depth of the multiplier (B) 182. The encoders 200 each output respective multiplication codes M that are used to select a multiple of the multiplicand (A) 180 as partial products, which are thereafter summed together to obtain the product of the multiplicand (A) 180 and the multiplier (B) 182.

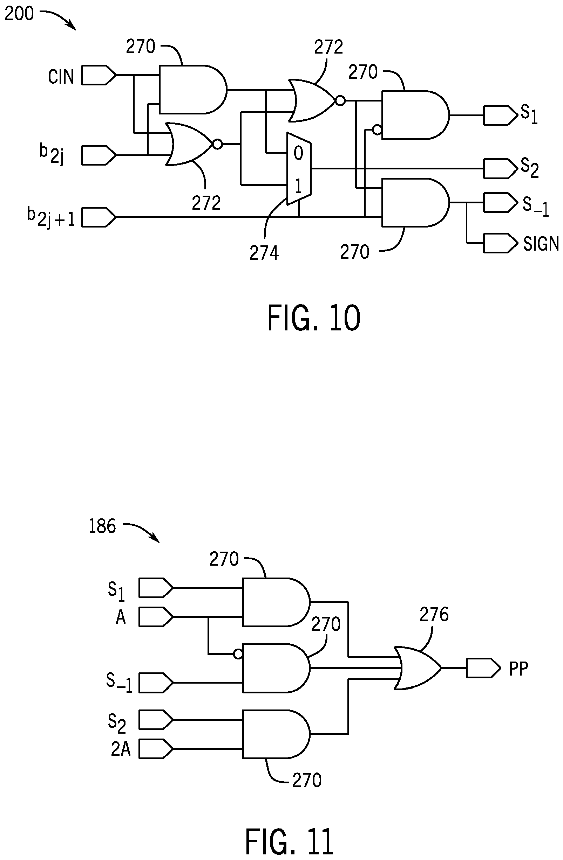

FIG. 10 is one example implementation of logic circuitry of an encoder 200. Any suitable logic circuitry that carries out a truth table with a Booth's encoding less at least one coding M may be used. The logic circuitry of the encoder 200 of FIG. 10 includes a number of AND gates 270, XOR gates 272, and a multiplexer 274. The logic circuitry of the encoder 200 of FIG. 10 receives as inputs a carry-in (CI) value corresponding to a carry-out (CO) from a previous encoder 200 (e.g., as computed by a prefix tree 262 or other carry-calculating structure), a first bit (b₂ⱼ) of the dibit of the multiplier (B) 182, and a second bit (b₂ⱼ₊₁) of the dibit of the multiplier (B) 182. The logic circuitry of the encoder 200 of FIG. 10 outputs scaling values S₂, S₁, S₋₁, and a sign bit. Collectively, the scaling values S₂, S₁, S₋₁ correspond to the coding M (which may be positive or negative) and the sign bit is used for completing the 2's complement representation.

FIG. 11 is one example implementation of logic circuitry of a partial product MUX 186. Any other suitable logic circuitry may be selected that achieves the same logical output may be selected. The logic circuitry of the partial product MUX 186 of FIG. 11 may be significantly smaller than a Booth's Radix 4 partial product MUX because there are fewer multiplication codes M that the partial product MUX 186 may accommodate. The logic circuitry of the partial product MUX 186 of FIG. 11 includes several large AND gates 270 and one large OR gate 276. The gates 270 and 276 of the logic circuitry of the partial product MUX 186 are sized to be large enough to accommodate the values of A and 2A (e.g., based on the bit depth of the multiplicand (A) 180); therefore, reducing the number of gates of the partial product MUX 186 may save a significant amount of area and energy. Thus, using encoders 200 that implement the efficient carry-based radix 4 encoding of this disclosure may provide a tremendous benefit.

The logic circuitry of the partial product MUX 186 of FIG. 11 receives as inputs the scaling values S₂, S₁, S₋₁, and multiples of the multiplicand (A) 182 of A and 2A. Note that the sign bit from the encoders 200 may be provided to any suitable partial product shift and sign extension logic and added into the partial products later in the process. The logic circuitry of the partial product MUX 186 of FIG. 11 outputs the selected partial product (PP) value based on these inputs.

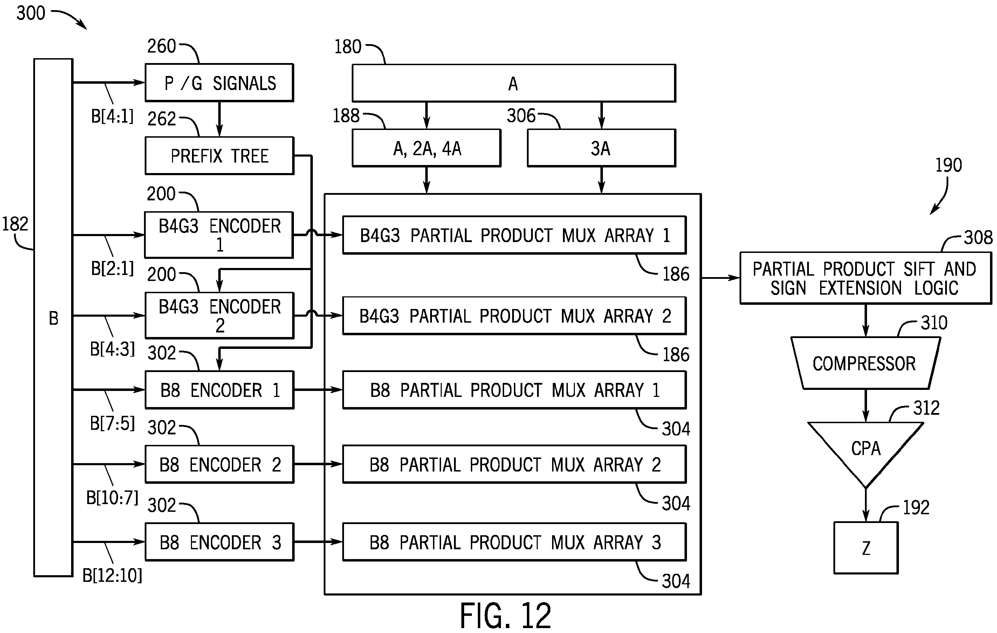

Both carry-based and carry-less methods may be combined into a single multiplier circuit. For example, FIG. 12 illustrates a multiplier circuit 300 that may be used in place of the multiplier circuits 160 discussed above. The multiplier circuit 300 includes both carry-based encoders 200 (illustrated as B4G3) and carry-less encoders 302 (illustrated as B8). The carry-based encoders 200 may implement, for example, the carry-based encoding scheme illustrated by the truth table 220 of FIG. 8. By contrast, the carry-less encoders 302 may implement a Booth's encoding scheme, such as Booth's radix 4 or Booth's radix 8. In the example shown in FIG. 12, the carry-less encoders implement a Booth's radix 8 (B8) encoding scheme. Note that the carry-based encoders 200 may complete computation before the higher-radix carry-less encoders 302. As such, they will not slow down the multiplier circuit 300 but still may save area and/or energy.

To support the carry-based encoders 200, propagate/generate circuitry 260 may produce propagate (p) and generate (g) signals based on only those bits of the multiplier (B) 182 that correspond to the carry-based encoders 200. In the example of FIG. 12, these are bits B[4:1]. The propagate/generate circuitry 260 may implement any suitable formula to generate the propagate (p) and generate (g) signals. A carry prefix tree 262, or a carry lookahead adder (CLA), may be used to calculate the carries across all of the carry-based encoders 200 based on the propagate (p) and generate (g) signals. The carry values from the carry prefix tree 262 may be used by the encoders 200, which respectively read in bits B[2:1] and B[4:3].

To remain consistent with the carry-based encoders 200, the first carry-less encoder 302 after the last carry-based encoder 200 may receive as its carry-in (CI) a value output by the carry prefix tree 262. The CI value received by the first carry-less encoder 302 is equivalent to the CO value of the immediately prior carry-based encoder 200. Subsequent carry-less encoders 302 do not receive distinct carry bits, but instead use the most significant bit of the previous input bits of the prior encoder 302 as a carry-in (e.g., as in the truth table 220A of FIG. 6). Thus, in the example of FIG. 12, the first carry-less encoder 302 receives 3 bits of the multiplier (B) 182 (B[7:5]) and a carry-in bit from the prefix tree 262, whereas the second carry-less encoder 302 and beyond receive 4 bits at a time of the multiplier (B) 182. These are bits B[10:7] and B[12: 10]. The last set of bits is special since the last dibit of the multiplier (B) 182 is actually signed. The two bits B[12:11] encode "00"=0, "01"=1, "10"=-2, and "11"=-1 and B[10] is the carry-in, which can be 0 or 1. When adding "1" to {0, 1, -2, -1} => {1, 2, -1, 0}, therefore the set of multiples to choose from is {-2, - 1, 0, 1, 2}.

The scaling values produced by the carry-based encoders 200 may be provided to corresponding partial product MUXes 186. The scaling values produced by the carry-less encoders 302 may be provided to corresponding partial product MUXes 304. The partial product MUXes 186 and 304 receive the respective scaling values from the encoders 200 and 302 and, based on the multiples of the multiplicand (A) 180, select the particular partial product. Here, shifter circuitry 188 may output values of A, 2A, and 4A, and tripler circuitry 306 may produce a value of 3A (e.g., A+2A), which is called for by a coding in Booth's Radix 8. The partial products may be added together in shift and sign extension, compressor, and carry propagate adder circuitry 190, shown here as partial product shift and sign extension logic circuitry 308, a compressor circuit 310 that applies any suitable compression (addition), and a carry-propagate adder (CPA) 312. The result is a product 192 (Z) equal to the value of the multiplicand (A) 180 multiplied by the multiplier (B) 182.

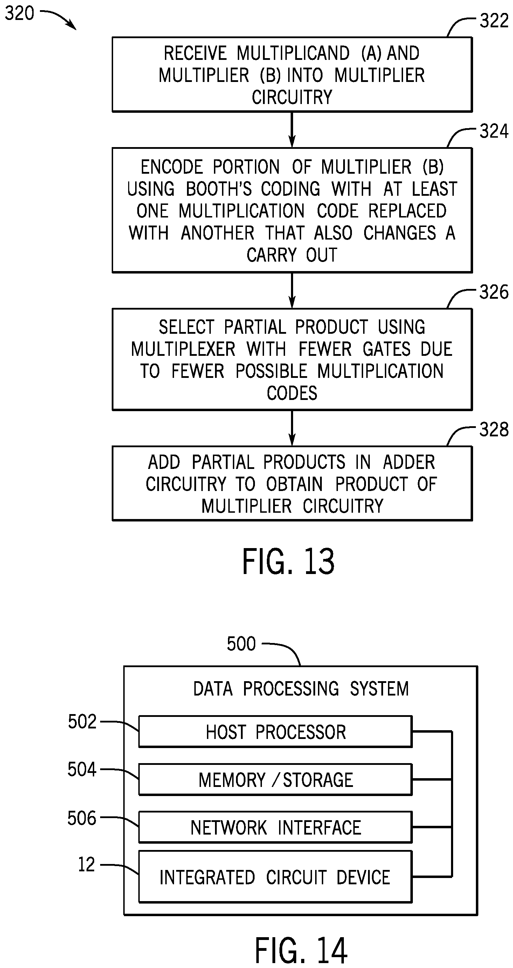

FIG. 13 is a flowchart 320 of a method for operating the multiplier circuitry of this disclosure. At block 322, a multiplicand (A) and multiplier (B) may be received into the multiplier circuitry. At block 324, a portion of the multiplier (B) may be encoded using a carry-based encoding scheme having some Booth's multiplication codes M that are found in a carry-less Booth's encoding scheme, but may have at least one fewer multiplication code M than the carry-less Booth's encoding scheme. The at least one multiplication code M that is removed from the carry-less Booth's encoding scheme may be replaced with another multiplication code M but with a different a carry-out value for that coding, resulting in the encoding scheme being carry-based. At block 326, however, the benefit of the reduced number of multiplication codes M may be experienced by using a partial product multiplexer that has fewer gates due to the fewer possible multiplication codes M. At block 328, partial products from the various encoders may be added together to obtain the product of the multiplicand (A) multiplied by the multiplier (B).

An integrated circuit including the multiplier circuitry of this disclosure may be a component included in a data processing system, such as a data processing system 500, shown in FIG. 14. The data processing system 500 may include the integrated circuit system 12 (e.g., a programmable logic device), a host processor 502, memory and/or storage circuitry 504, or a network interface 506. The multiplier circuitry of this disclosure may be part of the integrated circuit system 12 (e.g., a programmable logic device), the host processor 502, the memory and/or storage circuitry 504, or the network interface 506, or another integrated circuit such as a graphics processing unit (GPU) or AI application specific integrated circuit (ASIC). The data processing system 500 may include more or fewer components (e.g., electronic display, user interface structures, application specific integrated circuits (ASICs)). The integrated circuit device 12 may be used to efficiently implement a symmetric FIR filter or perform complex multiplication. The host processor 502 may include any of the foregoing processors that may manage a data processing request for the data processing system 500 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 504 may include random access memory (RAM), read-only memory (ROM), one or more hard drives, flash memory, or the like. The memory and/or storage circuitry 504 may hold data to be processed by the data processing system 500. In some cases, the memory and/or storage circuitry 504 may also store configuration programs (e.g., bitstreams, mapping function) for programming the integrated circuit device 12. The network interface 506 may allow the data processing system 500 to communicate with other electronic devices. The data processing system 500 may include several different packages or may be contained within a single package on a single package substrate. For example, components of the data processing system 500 may be located on several different packages at one location (e.g., a data center) or multiple locations. For instance, components of the data processing system 500 may be located in separate geographic locations or areas, such as different cities, states, or countries.

The data processing system 500 may be part of a data center that processes a variety of different requests. For instance, the data processing system 500 may receive a data processing request via the network interface 506 to perform encryption, decryption, machine learning, video processing, voice recognition, image recognition, data compression, database search ranking, bioinformatics, network security pattern identification, spatial navigation, digital signal processing, or other specialized tasks.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments

EXAMPLE EMBODIMENT 1. Multiplier circuitry to multiply a multiplicand value with a multiplier value, the multiplier circuitry comprising:
input circuitry to receive the multiplicand value and the multiplier value; and
carry-based coding circuitry to receive bits of the multiplier value and generate multiplication codes using a carry-based coding scheme that includes multiplication codes according to a Booth's coding scheme but with at least one multiplication code that is removed and replaced with another at least one multiplication code with a different value, wherein a first encoder of the carry-based coding circuitry receives a carry signal to adjust a multiplication code value of the first encoder based on a second encoder of the carry-based coding circuitry encoding the multiplication code with the different value.

EXAMPLE EMBODIMENT 2. The multiplier circuitry of example embodiment 1, wherein the carry-based coding circuitry comprises at least one encoder to generate at least four different multiplication codes when the Booth's coding scheme is to generate at least five different multiplication codes.

EXAMPLE EMBODIMENT 3. The multiplier circuitry of example embodiment 2, wherein the Booth's coding scheme is to generate multiplication codes corresponding to at least 0, 1, -1, 2, and -2 and the at least one encoder of the carry-based coding circuitry is to generate at least 0, 1, -1, and 2, but not -2.

EXAMPLE EMBODIMENT 4. The multiplier circuitry of example embodiment 2, wherein the Booth's coding scheme is to generate multiplication codes corresponding to at least 0, 1, -1, 2, and -2 and the at least one encoder of the carry-based coding circuitry is to generate at least 0, 1, 2, and -2, but not -1.

EXAMPLE EMBODIMENT 5. The multiplier circuitry of example embodiment 1, wherein the other at least one multiplication code with the different value comprises the only multiplication code in which the carry signal is not equal to an input bit received from the multiplier value.

EXAMPLE EMBODIMENT 6. The multiplier circuitry of example embodiment 1, wherein the encoders of the carry-based coding circuitry comprise a sequence of carry-based encoders to generate respective multiplication codes, wherein the respective multiplication codes are generated based on respective portions of the bits and the carry value corresponding to a previously generated multiplication code generated by a previous carry-based encoder in the sequence.

EXAMPLE EMBODIMENT 7. The multiplier circuitry of example embodiment 6, comprising a prefix tree to generate carry values to provide to at least some of the sequence of carry-based encoders.

EXAMPLE EMBODIMENT 8. The multiplier circuitry of example embodiment 7, wherein the prefix tree comprises a Sklansky, Brent-Kung, Kogge-Stone, Ladner-Fisher, or Han-Carson prefix tree.

EXAMPLE EMBODIMENT 9. The multiplier circuitry of example embodiment 1, comprising carry-less coding circuitry to receive other bits of the multiplier value and generate other multiplication codes using a carry-less coding scheme that includes multiplication codes according to the Booth's coding scheme or a different Booth's coding scheme.

EXAMPLE EMBODIMENT 10. The multiplier circuitry of example embodiment 9, wherein the carry-less coding circuitry is to generate the other multiplication codes according to a Booth's radix 4 coding scheme or a Booth's radix 8 coding scheme.

EXAMPLE EMBODIMENT 11. The multiplier circuitry of example embodiment 9, wherein a next encoder of the carry-less coding circuitry after a previous encoder of the carry-based coding circuitry uses a carry out of the previous encoder of the carry-based coding circuitry as a least significant bit of its coding scheme.

EXAMPLE EMBODIMENT 12. An integrated circuit comprising:
carry-based coding circuitry to receive a first portion of bits of a multiplier value and generate a first set of multiplication codes using a carry-based coding scheme;
first partial product multiplexing circuitry to select partial products as a multiple of a multiplicand based on respective multiplication codes of the first set of multiplication codes provided by the carry-based coding circuitry;
carry-less coding circuitry to receive a second portion of bits of the multiplier value and generate a second set of multiplication codes using a carry-less coding scheme; and
second partial product multiplexing circuitry to select partial products as a multiple of the multiplicand based on respective multiplication codes of the second set of multiplication codes provided by the carry-less coding circuitry.

EXAMPLE EMBODIMENT 13. The integrated circuit of example embodiment 12, wherein the carry-based coding circuitry and the carry-less coding circuitry are of different radices.

EXAMPLE EMBODIMENT 14. The integrated circuit of example embodiment 13, wherein the carry-less coding circuitry is of a higher radix than the carry-based coding circuitry.

EXAMPLE EMBODIMENT 15. The integrated circuit of example embodiment 13, wherein the carry-based coding circuitry is of radix 4.

EXAMPLE EMBODIMENT 16. The integrated circuit of example embodiment 13, wherein the carry-less coding circuitry is of radix 8.

EXAMPLE EMBODIMENT 17. The integrated circuit of example embodiment 12, comprising a prefix tree to generate carries for at least a subset of encoders of the carry-based coding circuitry.

EXAMPLE EMBODIMENT 18. The integrated circuit of example embodiment 17, wherein the prefix tree is to generate a carry for a first encoder of the carry-less coding circuitry receiving the second portion of bits of the multiplier after the carry-based coding circuitry.

EXAMPLE EMBODIMENT 19. A method comprising:
receiving a multiplicand (A) and multiplier (B) into multiplier circuitry;
encoding a portion of the multiplier (B) to generate multiplication codes using a carry-based encoding scheme having some Booth's multiplication codes M that are found in a carry-less Booth's encoding scheme, but with at least one fewer multiplication code M than the carry-less Booth's encoding scheme;
using a partial product multiplexer to select partial products based on the multiplication codes generated using the carry-based encoding scheme; and
adding the partial products to obtain a product of the multiplicand (A) multiplied by the multiplier (B).

EXAMPLE EMBODIMENT 20. The method of example embodiment 19, wherein the at least one multiplication code M that is removed from the carry-less Booth's encoding scheme is replaced with an existing multiplication code M but using a different a carry-out value for that coding.

## Claims

1. An integrated circuit device comprising multiplier circuitry to multiply a multiplicand value with a multiplier value, the multiplier circuitry comprising:
input circuitry to receive the multiplicand value and the multiplier value; and
carry-based coding circuitry to receive bits of the multiplier value and generate multiplication codes using a carry-based coding scheme that includes multiplication codes according to a Booth's coding scheme but with at least one multiplication code that is removed and replaced with another at least one multiplication code with a different value, wherein a first encoder of the carry-based coding circuitry receives a carry signal to adjust a multiplication code value of the first encoder based on a second encoder of the carry-based coding circuitry encoding the multiplication code with the different value.

2. The integrated circuit device of claim 1, wherein the carry-based coding circuitry comprises at least one encoder to generate at least four different multiplication codes when the Booth's coding scheme is to generate at least five different multiplication codes.

3. The integrated circuit device of claim 2, wherein the Booth's coding scheme is to generate multiplication codes corresponding to at least 0, 1, -1, 2, and -2 and the at least one encoder of the carry-based coding circuitry is to generate at least 0, 1, -1, and 2, but not -2.

4. The integrated circuit device of claim 2, wherein the Booth's coding scheme is to generate multiplication codes corresponding to at least 0, 1, -1, 2, and -2 and the at least one encoder of the carry-based coding circuitry is to generate at least 0, 1, 2, and -2, but not -1.

5. The integrated circuit device of any of the preceding claims, wherein the other at least one multiplication code with the different value comprises the only multiplication code in which the carry signal is not equal to an input bit received from the multiplier value.

6. The integrated circuit device of any of the preceding claims, wherein the encoders of the carry-based coding circuitry comprise a sequence of carry-based encoders to generate respective multiplication codes, wherein the respective multiplication codes are generated based on respective portions of the bits and the carry value corresponding to a previously generated multiplication code generated by a previous carry-based encoder in the sequence.

7. The integrated circuit device of claim 6, comprising a prefix tree to generate carry values to provide to at least some of the sequence of carry-based encoders.

8. The integrated circuit device of claim 7, wherein the prefix tree comprises a Sklansky, Brent-Kung, Kogge-Stone, Ladner-Fisher, or Han-Carson prefix tree.

9. The integrated circuit device of any of the preceding claims, comprising carry-less coding circuitry to receive other bits of the multiplier value and generate other multiplication codes using a carry-less coding scheme that includes multiplication codes according to the Booth's coding scheme or a different Booth's coding scheme.

10. The integrated circuit device of claim 9, wherein the carry-less coding circuitry is to generate the other multiplication codes according to a Booth's radix 4 coding scheme or a Booth's radix 8 coding scheme.

11. The integrated circuit device of claim 9 or 10, wherein a next encoder of the carry-less coding circuitry after a previous encoder of the carry-based coding circuitry uses a carry out of the previous encoder of the carry-based coding circuitry as a least significant bit of its coding scheme.

12. An integrated circuit device of claim 1, wherein the carry-based coding circuitry is to receive a first portion of the bits of the multiplier value and generate a first set of the multiplication codes using the carry-based coding scheme;
first partial product multiplexing circuitry to select partial products as a multiple of the multiplicand based on respective multiplication codes of the first set of multiplication codes provided by the carry-based coding circuitry;
carry-less coding circuitry to receive a second portion of the bits of the multiplier value and generate a second set of the multiplication codes using a carry-less coding scheme; and
second partial product multiplexing circuitry to select partial products as a multiple of the multiplicand based on respective multiplication codes of the second set of multiplication codes provided by the carry-less coding circuitry.

13. The integrated circuit device of claim 12, wherein the carry-based coding circuitry and the carry-less coding circuitry are of different radices.

14. A method comprising:
receiving a multiplicand (A) and multiplier (B) into multiplier circuitry;
encoding a portion of the multiplier (B) to generate multiplication codes using a carry-based encoding scheme having some Booth's multiplication codes M that are found in a carry-less Booth's encoding scheme, but with at least one fewer multiplication code M than the carry-less Booth's encoding scheme;
using a partial product multiplexer to select partial products based on the multiplication codes generated using the carry-based encoding scheme; and
adding the partial products to obtain a product of the multiplicand (A) multiplied by the multiplier (B).

15. The method of claim 14, wherein the at least one multiplication code M that is removed from the carry-less Booth's encoding scheme is replaced with an existing multiplication code M but using a different a carry-out value for that coding.
